# EUROPÄISCHE PATENTSCHRIFT

(11) **EP 2 609 705 B1**
(45) Veröffentlichungstag und Bekanntmachung des Hinweises auf die Patenterteilung: **13.07.2016**
(21) Anmeldenummer: 11749381.7
(22) Anmeldetag: 09.08.2011
(51) Int. Cl.: H04L 12/24, H04L 1/08, H04L 1/22, H04L 12/40, H04L 29/06, G05B 19/042

(54) **VERFAHREN ZUM ÜBERTRAGEN VON SENSORDATEN**
METHOD FOR TRANSMITTING SENSOR DATA
METHODE POUR TRANSMETTRE DES DONNÉES DE CAPTEUR

(30) Priorität: 26.08.2010 DE 102010039845
(43) Veröffentlichungstag der Anmeldung: 03.07.2013
(73) Patentinhaber: Robert Bosch GmbH, 70442 Stuttgart (DE)
(72) Erfinder: SCHWARZE, Klaus, 37115 Duderstadt (DE)
(86) Internationale Anmeldenummer: PCT/EP2011/063689
(87) Internationale Veröffentlichungsnummer: WO 2012/025375

(56) Entgegenhaltungen:
- WO-A1-2009/043794
- WO-A2-02/052787
- DE-A1- 10 240 669
- DE-A1-102008 009 691
- DE-C1- 2 706 616
- US-A1- 2003 076 221
- US-A1- 2004 146 051
- US-A1- 2007 101 030
- US-A1- 2008 291 042
- US-A1- 2009 158 360
- US-A1- 2009 169 007

## Beschreibung

Die Erfindung betrifft ein Verfahren zum Übertragen von Sensordaten sowie eine Sensoranordnung und eine Empfangseinheit zur Durchführung des Verfahrens.

### Stand der Technik

In Kraftfahrzeugen werden Sensoren eingesetzt, um physikalische und chemische Eigenschaften qualitativ oder als Messgröße quantitativ aufzunehmen. Von dem Sensor werden dann die Messgröße repräsentierende Sensordaten an Steuergeräte im Kraftfahrzeug weitergegeben. Auf Grundlage dieser Sensordaten werden die Abläufe im Kraftfahrzeug gesteuert und/oder geregelt.

Üblicherweise gibt ein Sensor ein analoges Signal aus, das Informationen zu der aufgenommenen Messgröße trägt. Wird dieses Signal manipuliert, kann in die Abläufe bzw. Prozesse des Kraftfahrzeugs, bspw. in die Motorsteuerung, eingegriffen werden.

So besteht ein mögliches Verfahren zur Leistungssteigerung von Kraftfahrzeugen, dem sogenannten Tuning, darin, Vorschaltsteuergeräte, die auch als Power-Boxes bezeichnet werden, zur Verfälschung von Sensorsignalen einzusetzen. Dabei werden dem Motorsteuergerät verfälschte Messwerte, bspw. Zuladedruck, Einspritzdruck und Luftmasse, vorgegeben, um eine erhöhte Motorleistung zu erzeugen. Die Vorschaltgeräte lassen sich im Regelfall nicht von der Software des Motorsteuergeräts erkennen. Für den Fall, dass ein solches Vorgehen zu einem Motorschaden führt, lassen sich die Vorschaltgeräte leicht entfernen, um die Kosten auf die Gewährleistung abzuwälzen.

Aus diesem Grunde wird angestrebt, Sensordaten sicher zu übertragen, was bedeutet, eine Übertragung von Sensordaten vorzunehmen, die nicht manipuliert werden kann oder bei der eine Manipulation erkannt und damit auch angezeigt werden kann.

Eine bekannte Vorgehensweise sieht eine digital signierte Übertragung eines Messwerts vor, wobei der Messwert in der Sensoranordnung digitalisiert und mit einem privaten Schlüssel der Sensoranordnung signiert wird. Die Empfangseinheit, regelmäßig ein Steuergerät, prüft mit dem öffentlichen Schlüssel, ob die Signatur korrekt ist. Die Übertragung erfolgt nicht mehr als Analogwert, sondern als Bitstrom auf einer digitalen Leitung, die bspw. als Bus ausgebildet ist. Dabei muss durch geeignete Lernverfahren bzw. Trustcenter die Verteilung der Schlüssel und das Übertragen der öffentlichen Schlüssel in die Steuergeräte, z. B. bei einem Tausch des Sensors, gewährleistet werden.

Die Druckschrift DE 10 2004 021 660 A1 beschreibt die Übertragung von Sensordaten in einem Kraftfahrzeug mit einem Abgas erzeugenden Verbrennungsmotor. Dabei wird mit einem ersten Sensor ein zur Geschwindigkeit korrelierter Messwert gemessen, der einem Fahrtenschreiber zur Aufzeichnung einer Geschwindigkeitskenngröße übermittelt wird. Der Fahrtenschreiber steht mit einem zweiten Sensor in Verbindung, mit dem ein zu einer Harnstoffzufuhr korrelierter Messwert messbar ist. Dieser Messwert kann dem Fahrtenschreiber verschlüsselt und digital übermittelt werden.

Die Druckschrift US 5 898 782 B beschreibt ein Verfahren zur sicheren Übertragung von Datenelementen zwischen einem Sensor und einer Aufzeichnungseinheit, wobei der Sensor Impulse liefert, die von der Aufzeichnungseinheit verarbeitet werden. Bei dem Verfahren werden verschlüsselte Datenelemente ausgetauscht, die wiederum digitale Befehlsbotschaften umfassen. Weitere Verfahren zur Übertragung von Sensordaten sind bereits aus der US 2008/0291042 A1 und der WO 2009/043794 A1 bekannt.

Es wird eine Übertragung von Sensordaten angestrebt, die sicher ist und gleichzeitig eine ausreichend schnelle Übertragung der mit der Sensoranordnung erfassten Daten ermöglicht.

### Offenbarung der Erfindung

Vor diesem Hintergrund werden ein Verfahren mit den Merkmalen des Anspruchs 1, eine Sensoranordnung gemäß Anspruch 8 und eine Empfangseinheit nach Anspruch 10 vorgestellt. Ausführungen ergeben sich aus den Unteransprüchen und der Beschreibung.

Mit dem beschriebenen Verfahren ist es somit möglich, Messwerte, wie bspw. Druck, Luftmasse usw., von "intelligenten" Sensoren kryptografisch gesichert zu übertragen. Im Vergleich zu einer bloßen Übertragung von digitalen Daten ermöglicht das vorgestellte Verfahren ebenso eine schnelle Übertragung der Daten.

Die Sensoranordnung verfügt über einen zusätzlichen, schnellen Analogausgang, der nicht gesichert ist aber eine ausreichend schnelle Übertragung der Daten ermöglicht. Es wird bspw. über einen gleitenden Mittelwert zusätzlich ein Verschlüsselungsverfahren angewendet und die verschlüsselten Daten an Die Empfangseinheit, bspw. ein Steuergerät, übertragen. Im Steuergerät findet mit dem digitalisierten, schnellen Analogsignal die gleiche Operation statt. Anschließend kann durch eine Plausibilitätsprüfung festgestellt werden, ob das analoge Signal verfälscht wurde.

Diese Plausibilitätsprüfung erfolgt bspw. in regelmäßigen Abständen und erfolgt parallel zur Übertragung des analogen Signals. Wird durch die Plausibilitätsprüfung eine Manipulation festgestellt, kann die Übertragung der analogen Daten gestoppt werden und/oder eine entsprechende Warnung ausgegeben werden.

Als Verschlüsselung können symmetrische und asymmetrische Verschlüsselungsverfahren verwendet werden. Es kann bspw. auch ein zertifikatsbasiertes Verfahren, wie bspw. SSL (Secure Sockets Layer), eingesetzt werden. Dies kann z.B. in der Motorsteuerung beim Schutz vor Tuningmaßnahmen aber auch als Maßnahme zum Schutz vor Produktpiraterie zum Einsatz kommen.

Das Verfahren kann grundsätzlich bei allen Sensoren Verwendung finden, deren Ausgangssignale vor Manipulation geschützt werden sollen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Kurze Beschreibung der Zeichnungen
- Figur 1: zeigt eine Anordnung nach dem Stand der Technik.
- Figur 2: zeigt eine Ausführung der Sensoranordnung und eine Ausführung der Empfangseinheit zur Durchführung des vorgestellten Verfahrens.
- Figur 3: zeigt einen Verlauf eines kombinierten Signals.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

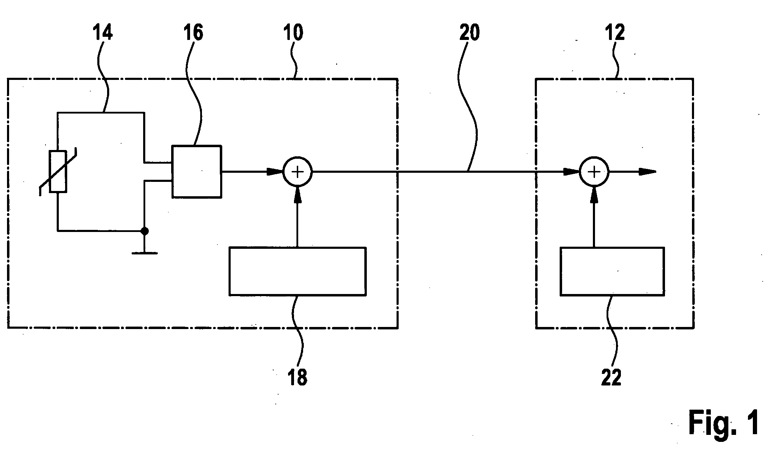

In Figur 1 ist eine Sensoranordnung, insgesamt mit der Bezugsziffer 10 versehen, gemäß dem Stand der Technik dargestellt. Die Darstellung zeigt weiterhin eine Empfangseinheit 12, in diesem Fall ein Steuergerät, die Messdaten von der Sensoranordnung 10 empfängt.

Die Sensoranordnung 10 weist einen Sensor 14, einen Analog-/Digital-Wandler 16 und eine Speichereinheit 18 auf. In der Speichereinheit 18 ist ein privater Schlüssel abgelegt. Zur Übertragung der Daten ist eine digitale Leitung 20 vorgesehen. In der Empfangseinheit 12 ist eine weitere Speichereinheit 22 vorgesehen, in der ein öffentlicher Schlüssel abgelegt ist.

Es erfolgt somit eine digital signierte Übertragung von Messwerten, wobei die aufgenommenen Messwerte in der Sensoranordnung 10 digitalisiert und mit dem privaten Schlüssel signiert werden. Die Empfangseinheit 12 prüft mit dem öffentlichen Schlüssel, ob die Signatur korrekt ist. Folglich erfolgt die Übertragung nicht mehr als Analogwert sondern als Bitstrom auf der digitalen Leitung 20.

Nachteilig bei dem in Figur 1 verdeutlichten Verfahren ist, dass aufgrund des Erfordernisses, die aufgenommenen Daten fortlaufend zu digitalisieren und zu verschlüsseln, bevor diese übertragen werden, eine schnelle Übertragung der Daten nicht möglich ist.

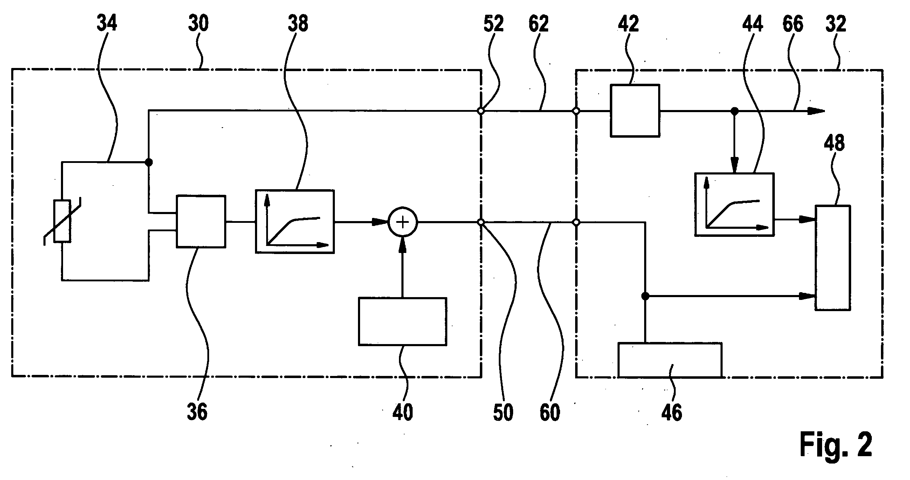

In Figur 2 ist eine Ausführungsform der beschriebenen Sensoranordnung, insgesamt mit der Bezugsziffer 30 bezeichnet, wiedergegeben. Weiterhin zeigt die Darstellung eine Empfangseinheit 32, die als Steuergerät ausgebildet ist. Die Sensoranordnung 30 und die Empfangseinheit 32 bilden eine Einheit zur Durchführung des vorgestellten Verfahrens.

Die Sensoranordnung 30 umfasst einen Sensor 34, einen Analog-/DigitalWandler 36, eine Recheneinheit 38 zur Mittelwertbildung und eine Verschlüsselungseinheit 40. Die Empfangseinheit 32 weist einen Analog-/Digital-Wandler 42, eine Recheneinheit 44 zur Mittelwertbildung, eine Entschlüsselungseinheit 46 und eine Recheneinheit 48 für eine Plausibilitätsprüfung auf.

Im Gegensatz zu der in Figur 1 dargestellten Sensoranordnung 10 ist die in Figur 2 dargestellte Sensoranordnung 30 insbesondere dann geeignet, wenn eine digitale Übertragung der Messdaten alleine zu langsam ist. Die Sensoranordnung 30 verfügt über einen ersten Ausgang 50 für das verschlüsselte digitale Signal und einen zweiten Ausgang 52, der einen schnellen Analogausgang darstellt, der nicht gesichert ist.

Zur Übertragung der Messdaten ist eine erste Leitung 60 vorgesehen, über die das verschlüsselte digitale Signal übertragen wird. Es ist weiterhin eine zweite Leitung 62 bereitgestellt, über die das analoge Signal übertragen wird. Mit den beiden Leitungen 60 und 62 ist es daher möglich, sowohl das analoge Signal als auch das verschlüsselte digitale Signal, insbesondere gleichzeitig, zu übertragen. Alternativ ist es möglich, die Übertragung der beiden Signale über eine einzige Leitung vorzunehmen. In diesem Fall wird ein kombiniertes Signal übertragen, das Informationen zu dem analogen Signal und zu dem verschlüsselten digitalen Signal trägt.

In der dargestellten Sensoranordnung 30 wird nach Bildung eines gleitenden Mittelwerts zusätzlich ein Verschlüsselungsverfahren verwendet. In der Empfangseinheit 32 findet mit dem empfangenen analogen Signal die gleiche Operation statt. Anschließend wird mit einer Plausibilitätsprüfung festgestellt, ob das analoge Signal verfälscht wurde. Es wird somit das analoge Signal mit dem verschlüsselten digitalen Signal verglichen. Dieses plausibilisierte analoge Signal kann dann weiterverwendet werden (Pfeil 66). Üblicherweise wird das analoge Signal solange verwendet, bis eine Manipulation festgestellt wurde.

Die Mittelwertbildung erfolgt, damit nicht permanent der digitale Wert verschlüsselt werden muss, sondern immer nur zu vorbestimmbaren Zeitpunkten ein Mittelwert des digitalisierten analogen Signals verschlüsselt wird. Dieser Mittelwert trägt eine Information zum Verlauf des Signals zu dem Zeitraum, über den die Mittelwertbildung durchgeführt wurde.

In Figur 2 sind zwei Leitungen 60 und 62 zur Messdatenübertragung vorgesehen. Grundsätzlich kann das Verfahren auch nur mit einer Leitung durchgeführt werden. In diesem Fall muss dass analoge Signal und das verschlüsselte digitale Signal über die eine Leitung übertragen werden. Dies kann bspw. durch ein aufeinanderfolgendes Übertragen der beiden Signale erfolgen. Eine weitere Möglichkeit sieht vor, dass das digitale Signal dem analogen Signal aufmoduliert wird. Dabei kann eine Frequenzmodulation oder auch eine Amplitudenmodulation vorgenommen werden. In diesem Fall wird ein kombiniertes Signal, dass die Informationen des analogen und des digitalen Signals trägt, über eine Leitung übertragen.

Dabei ist auch möglich, dass über den gesamten Verlauf des analogen Signals das digitale Signal aufmoduliert ist. Alternativ ist denkbar, das digitale Signal nur in bestimmten zeitlichen Abschnitten des analogen Signals zu modulieren. In jedem Fall ist es notwendig, in der Empfangseinheit eine Einrichtung bereitzustellen, mit der die beiden Anteile des kombinierten Signal, nämlich das analoge Signal und das verschlüsselte digitale Signal, extrahiert werden können.

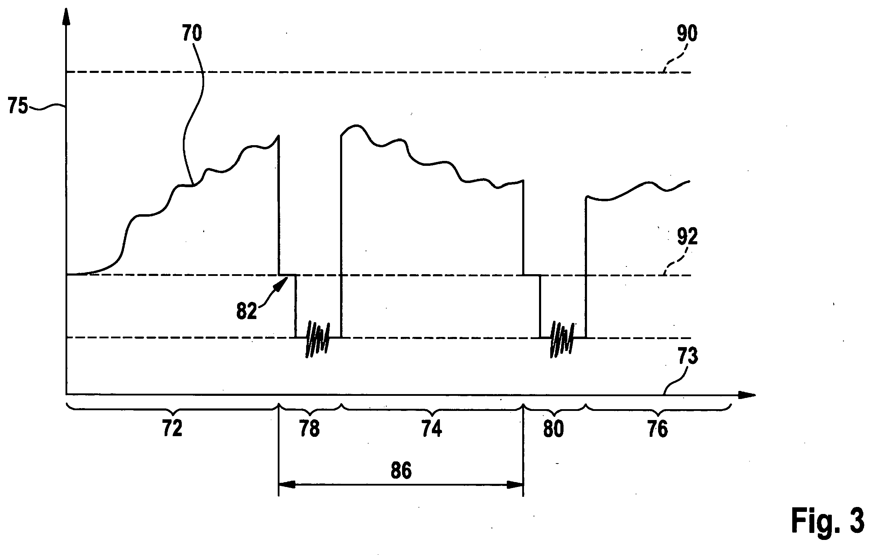

In Figur 3 ist der Verlauf eines kombinierten Signals 70 dargestellt, das Abschnitte 72, 74 und 76 aufweist, in denen lediglich ein analoges Signal übertragen wird, und Abschnitte 78 und 80, bei denen dem analogen Signal das digitale Signal aufmoduliert ist. An einer Abszisse 73 ist dabei die Zeit t und an einer Ordinate 75 die Spannung U aufgetragen.

Ein Pfeil 82 verdeutlicht den Start des aufmodilierten digitalen Signals, ein weiterer Pfeil 84 verdeutlicht das aufmodulierte digitale Signal. Ein Zeitraum T 86 gibt den Zeitraum zwischen zwei zeitlich aufeinanderfolgenden Modulationen und lässt auf eine Art Periode schließen.

Eine erste gestrichelte Linie 90 gibt den maximalen analogen Wert an. Eine zweite gestrichelte Linie 92 gibt den analogen Wert Null an. Wichtig dabei ist, dass das kombinierte Signal während der Modulation in einen Spannungsbereich gezogen ist, der von dem analogen Signal nicht erreicht wird. Dies erleichtert die Extraktion.

## Patentansprüche

1. Verfahren zum Übertragen von Sensordaten, bei dem ein Sensor (34) ein analoges Signal ausgibt, in Abhängigkeit des analogen Signals ein digitales Signal erzeugt wird, das digitale Signal verschlüsselt wird und sowohl das analoge Signal als auch das verschlüsselte digitale Signal zu einer Empfangseinheit (32) übertragen werden.

2. Verfahren nach Anspruch 1, bei dem das analoge Signal und das digitale Signal über eine Leitung (60, 62) übertragen werden.

3. Verfahren nach Anspruch 2, bei dem über die eine Leitung (60, 62) ein moduliertes Signal übertragen wird.

4. Verfahren nach einem der Ansprüche 1 bis 3, bei dem das analoge Signal und das verschlüsselte digitale Signal in der Empfangseinheit (32) miteinander verglichen werden.

5. Verfahren nach Anspruch 4, bei dem das analoge Signal vor dem Vergleich digitalisiert wird.

6. Verfahren nach einem der Ansprüche 1 bis 4, bei dem das digitale Signal vor der Verschlüsselung einer Mittelwertbildung unterzogen wird.

7. Verfahren nach Anspruch 5 und 6, bei dem das empfangene analoge Signal digitalisiert wird und dann einer Mittelwertbildung unterzogen wird.

8. Sensoranordnung, zur Durchführung eines Verfahrens nach einem der Ansprüche 1 bis 7, mit einem Sensor (34) zur Aufnahme von Messwerten, der ein analoges Signal bereitstellt, und einem Analog-/Digital-Wandler (36, 42) zur Bereitstellung eines digitalen Signals in Abhängigkeit des analogen Signals, und einer Verschlüsselungseinheit (40) zur Verschlüsselung des digitalen Signals, wobei die Sensoranordnung (30) dazu ausgebildet ist, das analoge Signal und das verschlüsselte digitale Signal zu übertragen.

9. Sensoranordnung nach Anspruch 8, die eine Recheneinheit (38,44) zur Mittelwertbildung aufweist.

10. Empfangseinheit, zur Durchführung eines Verfahrens nach einem der Ansprüche 1 bis 7, mit einem Analog-/Digital-Wandler (36, 42), einer Entschlüsselungseinheit (46) und einer Recheneinheit (48) für eine Plausibilitätsprüfung.

## Claims

1. Method for transmitting sensor data, in which a sensor (34) outputs an analogue signal, a digital signal is generated on the basis of the analogue signal, the digital signal is encrypted and both the analogue signal and the encrypted digital signal are transmitted to a receiving unit (32).

2. Method according to Claim 1, in which the analogue signal and the digital signal are transmitted via a line (60, 62).

3. Method according to Claim 2, in which a modulated signal is transmitted via the one line (60, 62).

4. Method according to one of Claims 1 to 3, in which the analogue signal and the encrypted digital signal are compared with one another in the receiving unit (32).

5. Method according to Claim 4, in which the analogue signal is digitized before the comparison.

6. Method according to one of Claims 1 to 4, in which the digital signal is subjected to averaging before the encryption.

7. Method according to Claims 5 and 6, in which the received analogue signal is digitized and is then subjected to averaging.

8. Sensor arrangement for carrying out a method according to one of Claims 1 to 7, having a sensor (34) for recording measured values, which provides an analogue signal, and an analogue/digital converter (36, 42) for providing a digital signal on the basis of the analogue signal, and an encryption unit (40) for encrypting the digital signal, the sensor arrangement (30) being designed to transmit the analogue signal and the encrypted digital signal.

9. Sensor arrangement according to Claim 8, which has a computing unit (38, 44) for averaging.

10. Receiving unit for carrying out a method according to one of Claims 1 to 7, having an analogue/digital converter (36, 42), a decryption unit (46) and a computing unit (48) for a plausibility check.

## Revendications

1. Procédé de transmission de données de capteur, dans lequel un capteur (34) délivre un signal analogique, un signal numérique est généré en fonction du signal analogique, le signal numérique est crypté et le signal analogique, ainsi qu'également le signal numérique chiffré, sont transmis à une unité de réception (32).

2. Procédé selon la revendication 1, dans lequel le signal analogique et le signal numérique sont transmis par l'intermédiaire d'une ligne (60, 62).

3. Procédé selon la revendication 2, dans lequel un signal modulé est transmis par l'intermédiaire d'une ligne (60, 62).

4. Procédé selon l'une quelconque des revendications 1 à 3, dans lequel le signal analogique et le signal numérique crypté sont comparés l'un à l'autre dans l'unité de réception (32).

5. Procédé selon la revendication 4, dans lequel le signal analogique est numérisé avant la comparaison.

6. Procédé selon l'une quelconque des revendications 1 à 4, dans lequel le signal numérique est soumis à un calcul de moyenne avant le cryptage.

7. Procédé selon les revendications 5 et 6, dans lequel le signal analogique reçu est numérisé puis est soumis à un calcul de moyenne.

8. Système de capteur destiné à mettre en oeuvre un procédé selon l'une quelconque des revendications 1 à 7, comportant un capteur (34) destiné à acquérir des valeurs de mesure qui fournit un signal analogique, un convertisseur analogique/numérique (36, 42) destiné à fournir un signal numérique en fonction du signal analogique, et une unité de cryptage (40) destinée à crypter le signal numérique, dans lequel le système de capteur (30) est conçu pour transmettre le signal analogique et le signal numérique crypté.

9. Système de capteur selon la revendication 8, comportant une unité de calcul (38, 44) destinée à calculer la moyenne.

10. Unité de réception destinée à mettre en oeuvre un procédé selon l'une quelconque des revendications 1 à 7, comportant un convertisseur analogique/numérique (36, 42), une unité de décryptage (46) et une unité de calcul (48) destinée à effectuer un test de plausibilité.
